## Europäisches Patentamt

## European Patent Office

## Office européen des brevets

(19)

(11) Veröffentlichungsnummer: **0 256 290**
**A2**

# (12) EUROPÄISCHE PATENTANMELDUNG

(21) Anmeldenummer: 87109812.5

(22) Anmeldetag: 07.07.87

(51) Int. Cl.⁴: **C09K 21/02** , **D21H 3/66** , **D21H 1/04** , **D06M 11/00** , **B05D 1/38**

(30) Priorität: 15.07.86 DE 3623858

(43) Veröffentlichungstag der Anmeldung:
24.02.88 Patentblatt 88/08

(84) Benannte Vertragsstaaten:
**AT BE CH DE FR GB IT LI**

(71) Anmelder: **Lüchtrath, Bern**
**Ebertsklinge 22**
**D-8700 Würzburg(DE)**

(72) Erfinder: **Lüchtrath, Bern**
**Ebertsklinge 22**
**D-8700 Würzburg(DE)**

(74) Vertreter: **Pätzold, Herbert, Dr.-Ing.**
**Widenmayerstrasse 49**
**D-8000 München 22(DE)**

(54) **Verwendung von Wasserglas oder dergleichen Stoff zum Aufbringen auf Trägermaterialien und Verfahren zur Herstellung solcher Trägermaterialien.**

(57) Die Erfindung betrifft die neuartige Verwendung von Wasserglas oder einem Wasserglas/Füllstoffgemisch bestimmter Viskosität, beispielsweise 45 Pa.s., als einen Stoff zum Aufbringen auf Trägermaterialien (1), insbesondere vlies-, papier-oder pappenartigen Materialien in einer dünnen Schicht (2) zur Erhöhung ihrer Festigkeit und/oder zur Verbesserung ihres Brandverhaltens. Der Füllstoff kann z.B. Kaolin-oder Quarzpulver sein. Der pH-Wert des Wasserglases beträgt z.B. etwa 12 und der Feststoffgehalt kann z.B. bei 50 % liegen. Die Erfindung betrifft auch ein Verfahren zur Herstellung eines schwer entflammbaren oder nicht brennbaren Trägermaterials sowie eines Wasserglases oder dergleichen lösliches Silikat in Verbindung mit einem anorganischen feinkörnigen und/oder vernetzbaren fasrigen Stoff als Füllstoff zum Ausfüllen von Hohlräumen und zum Formen von dreidimensionalen nicht brennbaren Gegenständen.

EP 0 256 290 A2

## Verwendung von Wasserglas oder dergleichen Stoff zum Aufbringen auf Trägermaterialien und Verfahren zur Herstellung solcher Trägermaterialien

Die Erfindung betrifft eine neuartige Verwendung von Wasserglas oder dergleichen Stoff in Verbindung mit bestimmten Trägermaterialien. Sie betrifft darüber hinaus auch ein Verfahren zur Herstellung solcher Trägermaterialien.

Trägermaterialien können z.B. aus jeder Art von papier-oder pappenartigen oder fließartigen Werkstoffen bestehen, die mehr oder weniger brennbar oder nicht brennbar sind. Es kann sich, aber auch um räumliche Trägermaterialien handeln, die aus papier, pappen-oder vliesartigen Materialien geformt sind.

Durch die deutschen Patentanmeldungen P 33 06 528.4 und P 33 06 478.4 sind bereits nicht brennbare papier-oder pappenartige Werkstoffe und Verfahren zu ihrer Herstellung bekannt geworden, die besonders kostspielig in der Herstellung sind und deren mechanische Eigenschaften (Festigkeit, Biegefähigkeit) sehr zu wünschen übrig lassen. Um die mechanischen Eigenschaften solcher pappenartigern Werkstoffe zu verbessern, sind diese ein-oder beidseitig mit Aluminiumfolie beschichtet worden. Hier bereitete jedoch die Verklebung der Aluminiumfolie mit dem Werkstoff Schwierigkeiten, abgesehen von den hohen Aufwendungen als solche, die nur aufgebracht wurden, um lediglich die mechanischen Eigenschaften zu verbessern.

Es sind auch eine Reihe schwer entflammbarer papier-oder pappenartiger Werkstoffe unterschiedlicher Güteklasse bekannt, die befriedigende mechanische Eigenschaften aufweisen. Hier besteht aber das große Interesse an einer Erhöhung der Schwerentflammbarkeit in Richtung einer Nichtbrennbarkeit.

Aufgabe der Erfindung ist es, einen weitgehend einfachen Weg aufzuzeigen, nicht brennbare oder -schwer entflammbare Trägermaterialien zu erhalten, die wesentlich verbesserte mechanische Eigenschaften aufweisen, ohne daß eine aufwendige Kaschierung mit Aluminiumfolie erforderlich ist. So sollen die nicht brennbaren papier-oder pappenartigen Trägermaterialien z.B. ohne Bruchgefahr faltbar und zu Rollen aufwickelbar sein. Die -schwer entflammbaren papier-oder pappenartigen Trägermaterialien sollen bei weitgehend einfacher und billiger Herstellungsweise in Richtung einer Nichtentflammbarkeit wesentlich verbessert sein, ohne daß sie dabei ihrer guten mechanischen Eigenschaften (Rollbarkeit, Faltbarkeit) verlustig gehen. Die Erfindung soll jedoch nicht auf zweidimensionale, flächige Trägermaterialien mit verbesserten mechanischen Eigenschaften und/oder verbesserten Schwerentflammbarkeitseigenschaften beschränkt sein. Ziel der Erfindung ist es, auch besonders einfach herstellbare dreidimensionale Trägerwerkstoffe jeder Art, insbesondere aus papier-und pappenartigen Werkstoffen, anzugeben , die gegenüber vergleicharen bekannten Produkten eine wesentlich erhöhte Brandsicherheit aufweisen und/oder beachtlich verbesserte mechanische Eigenschaften besitzen. Hierzu gehört auch, daß die erfindungsgemäß hergestellten Trägermaterialien unter dem Einfluß extremer Temperatureinwirkungen durch chemische Reaktionen an ihren Oberflächen temperaturerniedrigend wirken.

Die Aufgabe wird erfindungsgemäß dadurch gelöst, daß Wasserglas oder dergleichen Stoff bzw. Stoffgemisch mit einer gewählten Viskosität auf Trägermaterialien auf gebracht wird, um dadurch die mechanischen Eigenschaften (Festigkeit, Biegefähigkeit) und/oder ihre Schwerentflammbarkeitseigenschaft wesentlich zu verbessern. Dabei wird unter Aufbringen insbesondere Besprühen, Beschichten, Aufstreichen, Aufspachteln oder Aufrollen von Wasserglas oder Wasserglasgemischen verstanden. Es kann sich auch um ein Tränken des Trägermaterials in Wasserglas oder dergleichen Stoff handeln.

Die Erfindung betrifft aber auch ein Verfahren zur Herstellung von Trägermaterialien mit verbesserten mechanischen Eigenschaften und/oder verbesserten Schwerentflammbarkeitseigenschaften unter Verwendung von Wasserglas oder dergleichen Stoffen.

Die Herstellung vergleichbarer bekannter Trägermaterialien ist, wie gesagt, mit erheblichen Aufwand verbunden, um vollkommen nicht brennbare Werkstoffe zu erhalten. Es zeigte sich, daß dieser Aufwand überraschenderweise mit dadurch begründet ist, daß die bekannten Trägermaterialien z.B. nach den deutschen Patentanemldungen P 33 06 528.4 und P 33 06 478.4 auf herkömmlichen Papier-und Pappenmaschinen in nur einem Verfahrensgang hergestellt werden. Es ist der Verdienst des hier betreffenden Erfinders, erkannt zu haben, daß erst dann wesentlich verbesserte Trägermaterialien hergestellt werden können, wenn man davon abgeht, das Trägermaterial in einem einzigen Verfahrensschritt herstellen zu wollen.

Die Aufgabe zur Angabe eines verbesserten Herstellungsverfahrens für nicht brennbare oder -schwer entflammbare Trägermaterialien wird erfindungsgemäß dadurch gelöst, daß mit Hilfe eines ersten Verfahrens auf an sich bekannte Weise zunächst ein nicht brennbares oder schwer entflammbares Trägermaterial hergestellt wird und daß erst mit Hilfe eines anschließenden zweiten Verfahrens das Trägermaterial zur Verbesserung seiner mechanischen Eigenschaften und/oder seiner Schwerentflammbarkeitseigenschaften mit Wasserglas oder einem vergleichbaren Stoff in Kontakt gebracht wird. Auf diese Weise lassen sich nach bekannten Verfahren z.B. nicht brennbare und schwer entflammbare papier-und pappenartige Werkstoffe herstellen. Zu einem beliebigen Zeitpunkt werden dann beliebige Mengen eines solchen Werkstoffes in einem zweiten Verfahrensgang auf sehr einfacher Weise mit Wasserglas in Kontakt gebracht, um dadurch in gewünschter Weise die Werkstoffeigenschaften gezielt verbessern zu können.

Es ist zwar schon bekannt, Wasserglas als Klebstoff für Papiere und insbesondere Wellpappen zu verwenden. In jüngerer Zeit geht man jedoch mehr dazu über, derartige Klebstoffe durch Stärkeklebstoffe zu ersetzen. In der Baustoffindustrie sowie in der Gießereitechnik wird Wasserglas als Kernbindemittel eingesetzt. Aufgrund ihrer - schmutztragenden und emulgierenden Eigenschaften finden Wassergläser auch Einsatz in Wasch-und Reinigungsmitteln. Größere Bedeutung haben Wassergläser als relativ ungiftige und preisgünstige Korrosionsschutzmittel. Auch werden Wassergläser zur Viskositätserniedrigung von keramischen Schlickern verwendet. Da Wassergläser die katalytische Wirkung von Schwermetallen vermindern, finden sie auch Verwendung als Stabilisatoren bei der Peroxidbleiche von Papieren und Textilien. Wassergläser werden außerdem bei der Boden-und Gebirgsverfestigung im Haus-, Tunnel-,und Bergbau sowie bei der humuslosen Begrünung von Dünen und Schutthalden verwendet. Durch Zugabe von Produkten auf Wasserglasbasis können die Erträge leichter Böden bei geeigneter Verfahrensweise und Bebauung beachtlich verbessert werden. Wasserglas wird auch zur Flockung in der Wasseraufbereitung verwendet. Wassergläser finden sich schließlich auch in Mineralfarben und Anstrichmitteln. Die vorteilhafte Verwendung von Wasserglas auch in Verbindung mit einem anorganischen mineralischen Füllstoff als Material zum Beschichten oder Tränken von Trägermaterialien, insbesonere papier-pappen-und vliesartigen Werkstoffen, war durch den vorstehenden Stand der Technik weder offenbart noch nahegelegt. So war es besonders überraschend, daß nicht nur die mechanischen Eigenschaften der Trägermaterialien wesentlich verbessert werden konnten sondern auch die Schwerentflammbarkeits und Nichtbrennbarkeitseigenschaften, wozu die temperatursenkenden Eigenschaften durch oberfläches Ausblühen von Wasserglas, insbesondere Natronwasserglas hinzukommt.

Vorteilhafte Ausführungen und Weiterbildungen der Erfindung ergeben sich aus den Merkmalen der Unteransprüche und/oder der nachfolgenden Beschreibung.

In einer schematichen Zeichnung ist ein erfindungsgemäß hergestelltes bzw. behandeltes Trägermaterial dargestellt.

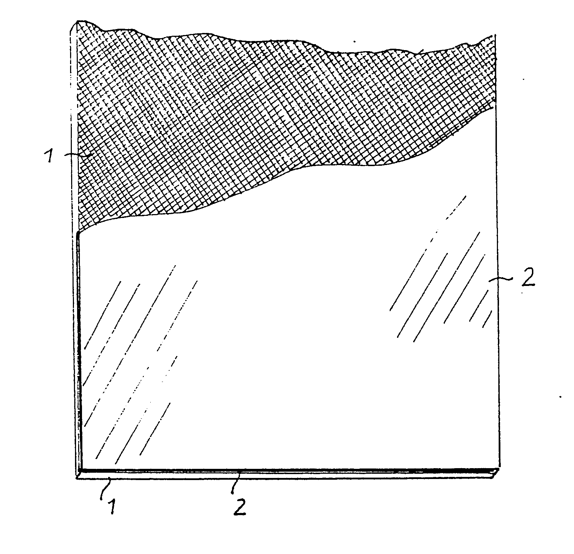

Die Zeichnung zeigt die Draufsicht auf einen vliesartigen Werkstoff 1, der teilweise mit einem Wasserglas/Füllstoffgemisch 2 beschichtet ist. Es handelt sich um ein Natronwasserglas mit einem pH-Wert von etwa 12,dem als Füllstoff Kaolin zugemischt ist. Der Gesamtfeststoffgehalt liegt bei ca. 50 %. Die Viskosität ist auf etwa 45 Pa.s. eingestellt. Das Wasserglas/Füllstoffgemisch ist über eine Walze auf herkömmliche Weise auf das Vlies aufgetragen worden. Hier-bei kann es sich um einen einmaligen Beschichtungsvorgang oder um mehrere aufeinanderfolgende Beschichtungsvorgänge über mehrere in Abständen hintereinander geschaltete Auftragswalzen handeln. Nach einer Beschichtung ist das Vlies in einem Trockenkanal auf bekannte Weise einer Trocknung ausgesetzt worden. Die beschichtete Oberfläche ist glatt und weist eine überraschend hohe Schlag und Ritzfestigkeit auf. Die Beschichtung widersteht auch starken manu ellen Scheuereinwirkungen mit einem scharfen Gegenstand, z.B. einem Messer. Wird ein brennender Lötkolben gegen das beschichtete Vlies gehalten, so blüht das Wasserglas aus. Dieser Ausblüheffekt geht mit einer oberflächlichen Temperaturerniedrigung einher, die bei einem Brandkatastrophenfall sehr erwünscht ist. Trotz der hohen Festigkeit der aufgetragenen Schicht weist diese eine überraschend hohe Elastizität auf, so daß das erfindungsgemäß beschichtete Vlies leicht und problemlos auf Vorratsrollen aufgerollt werden kann. Die aufgetragene Schicht 2 kann die Oberfläche des Vlieses 1 bilden. Sie kann aber auch als Klebeschicht für einen weiteren nicht dargestellten Vlies dienen, der auf die Schicht 2 angelegt wird. Auf diese Weise können erfindungsgemäß mehrere übsereinander liegende Vliesteile ein mehrschichtiges Vlies bilden, wobei zwischen benachbarten Vliesteilen eine Wasserglas-oder Wasserglas/Füllstoffschicht vorhanden ist, die die Vliesteile fest miteinander verbindet. Das erfindungsgemäße mehrschichtige Vlies besitzt hervorragende Fertigkeitseigenschaften. Die Nichtbrennbarkeitseigenschaften des Vlieses werden durch seine temperaturerniedrigenden Wirkungen beim Ausblühen des Wasserglases aufgrund erhöhter Wärmeeinwirkungen·vorteilhaft unterstützt bzw. ergänzt.

Ausblüheffekte von Wassergläsern in Mineralfarben und Anstrichmitteln sind an sich bekannt. Hier sind sie jedoch von Nachteil, so daß man solchen Wassergläsern (Kaliwassergläser) den Vorzug gibt, die nicht ausblühen.

Die Erfindung ist nicht auf die Beschichtung von Glas-oder Mineralfaservliesen mit Wasserglas oder Wasserglas/Füllstoffgemischen beschränkt. Es kann sich auch um ein nicht brennbares Papier oder nichtbrennbare Pappe nach den deutschen Patentanmeldungen P 33 06 528.4 und P 33 06 478.4 handeln. Die Oberflächen hiernach hergestellter Pappen haben eine sehr niedrige Schlag- und Ritzfähigkeit. Außerden sind diese Pappen wegen ihrer hohen Brüchigkeit nicht falt-oder rollbar. Diese schwerwiegenden Nachteile lassen sich beheben, wenn die Pappen an wenigstens einer Seite in erfindungsgemäßer Weise beschichtet werden.

Es ist klar, daß die Erfindung nicht auf ein bestimmtes Auftragsverfahren beschränkt ist, um das Wasserglas bzw. das Wasserglas/Füllstoffgemisch auf das Trägermaterial, beispielsweise einen papier-pappen-oder vliesartigen Werkstoff aufzubringen. Das Auftragen über Rollen oder Walzen ist in vielen Fällen besonders vorteilhaft.Bei einer entsprechend gewählten Viskosität des Wasserglases ist aber auch ein Aufstreichen oder Aufsprühen ohne weiteres möglich. Auch im Tauchverfahren kann der Werkstoff durch ein Wasserglasbad hindurchgeleitet werden. Hier bieten sich dem zuständigen Verfahrensingenieur eine große Vielfalt von Auftragsmöglichekeiten ohne weiteres an, die hier nicht im einzelnen beschrieben werden müssen.

Mit den bekannten nicht brennbaren Pappen nach den deutschen Patentanmeldungen P 33 06 528.4 und P 33 06 478.4 hat man z.B. mit großem Erfolg Gitterboxen ausgekleidet, die zur Aufbewahrung von Lagergütern dienen. Wegen der hohen Brüchigkeit der Pappen mußten diese in Abschnitte unterteilt werden, um diese in die Gitterboxen zu ihrer Verkleidung hineinstellen zu können. Insoweit wird auf den Bericht in "Der Maschinenschaden", 56. Jahrgang, Heft 3/1983, Seite 108 bis 113 verwiesen.

Mit einem erfindungsgemäß beschichteten vlies-oder pappen-artigen Werkstoff lassen sich die Gitterboxen ummanteln, da wegen der hohlen Biege-und Faltfestigkeit dieser Werkstoffe eine Aufteilung in einzelne Abschnitte, die in die Gitterboxen hineingestellt werden, nicht mehr notwendig ist.

Bei den bekannten nicht brennbaren Pappen hat man einen Temperaturerniedrigungseffekt bei Brandeinwirkung dadurch erreicht, daß bei der Pappenherstellung Xonotlite mit hohem Wassergehalt eingesetzt wurden. Es hat sich jedoch herausgestellt, daß die Herstellung und Verarbeitung solcher Xonotlite auch wegen ihrer zeitlich sehr beschränkten Lagerfähigkeit als Rohstoff sehr aufwendig ist und die betreffenden Xonotlit-Pappen außerordentlich teuer sind. Solche bekannten Xonotlit-Pappen sind durch den erfinddungsgemäß beschichteten Werkstoff ohne weiteres ersetzbar, die für einen Bruchteil der Kosten herstellbar sind und dabei wesentlich günstigere mechanische Eigenschaften aufweisen. Die erfindungsgemäß beschichteten Glasvliese besitzen eine erstaunlich hohe und gegenüber unbeschichteten Glasvliesen im Sinne der DIN-Vorschriften 4102 wesentlich verbessertes Brandverhalten.

Das erfindungsgemäße Beschichtungs-Verfahren mit Wasserglas oder dergleichen löslichen Silikaten mit oder ohne mineralischen Füllstoffen ist aber auch bei solchen Werkstoffen von Vorteil, die nach der Beschichtung nicht die Klasse A der nicht brennbaren Stoffe gemäß der DIN-Vorschrift 4102 erlangen, weil in vielen Fällen die Klasse A nicht erforderlich ist. So genügt es vielfach, wenn die Klasse B1 der schwer entflammbaren Baustoffe erreicht wird. Hierzu können erfindungsgemäß herkömmliche Papiere und Pappen verwendet werden, auf die das Wasserglas bzw. das Wasserglas/Füllstoffgemisch aufgetragen worden ist. Die aufzubringende Schichtdicke hängt dabei von der Struktur und der Festigkeit des zu beschichtenden Ausgangsmaterials ab. Durch Wahl der Viskosität und der Auftragsart (in einem oder mehreren aufeinanderfolgenden Schritten) läßt sich die Schichtdicke leicht einstellen, die nicht brennbaren Glas-oder Keramikfaservliesen außer dem erwähnten Temperaturerniedrigungseffekt die für die Klasse A erfor derliche Stabilität verleiht.

Bei leicht entflammbaren Materialien, wie Papier und Pappe hat die erfindungsgemäße Schicht nicht nur eine Festigkeitsfunktion sondern vor allem eine Brandschutzfunktion und außerdem die sehr erwünschte Temperaturerniedrigungsfunktion.

Erfindungsgemäß beschichtete oder getränkte Papiere oder Pappen erreichen daher die Schwerentflammbarkeitsklasse B1.

Die gewünschte Viskosität läßt sich leicht durch die Wahl des Wasserglases oder Wasserglasgemisches und/oder die Menge des zuzugebenden Füllstoffes und/oder durch zuzusetzendes Wasser leicht einstellen. Durch die Wahl des Wasserglases oder Wasserglasgemisches läßt sich aber auch der Temperaturerniedrigungseffekt einstellen.

Von besonderem Vorteil kann es sein, wenn der Füllstoff ein feinkörniger und/oder ein vernetzbarer fasriger anorganischer Stoff ist. Der fasrige anorganische Stoff kann vorteilhafterweise eine keramische Faser, z.B. Inorphil sein.

Es hat sich herausgestellt, daß es für viele Anwendungsfälle besonders vorteilhaft ist, wenn die Viskosität auf einen Wert eingestellt ist, die ein Aufsprühen, Aufstreichen, Aufspachteln oder Aufbringen des Wasserglases oder Wasserglas/Füllstoffgemisches auf das Trägermaterial in einer Art und Weise erlaubt, daß das Trägermaterial von dem Wasserglas oder dergleichen Stoff oder Stoffgemisch weitgehend durchdrungen und die Trägermaterialteilchen im wesentlichen von dem Silikat ummantelt sind oder wenn die Viskosität auf einen Wert eingestellt ist, die ein Tränken des Trägermaterials mit Wasserglas oder dem Wasserglas/Füllstoffgemisch in einer Art und Weise erlaubt, daß das Trägermaterial von dem Wasserglas oder dergleichen Stoff oder Stoffgemisch weitgehend durchdrungen und die Trägermaterialteilchen im wesentlichen von dem Silikat ummantelt sind.

Wichtig ist es, daß das Trägermaterial nicht nur oberflächlich beschichtet wird, sondern daß der aufzubringende Stoff das Trägermaterial weitgehend durchdringt, so daß im wesentlichen alle Teile (Fasern) des Trägermaterials möglichst vollständig ummantelt werden. Hierzu kann es von wesentlichem Vorteil sein, solche vliesartigen Materialien und/oder solche vliesartigen Strukturen auszuwählen, daß das Ziel der weitgehenden Ummantelung der Teile des Vlieses, beispielsweise der Fasern eines Glasfaservlieses, unterstützt bzw. wesentlich begünstigt wird.

Vorteilhafterweise wird hierzu das Trägermaterial beidseitig mit dem genannten Stoff in innigen Kontakt gebracht. Ausgezeichnete Ergebnisse lassen sich mit einem vliesartigen Trägermaterial erzielen, daß auf einer Vorratsrolle aufgewickelt ist und von dieser abgezogen wird, um den pastenartigen Stoff mit einer ersten Rakelvorrichtung auf der Oberseite des Trägermaterials aufzutragen, das über Rollen laufend zur ersten Trocknung durch einen Trockenkanal hindurchgeführt wird, um anschließend über Rollen derart umgelenkt zu werden; daß nunmehr die Unterseite des Trägermaterials zu oberst zu liegen kommt. Mit einer zweiten Rakelvorrichtung wird weiterer pastenartiger Stoff auf die jetzt nach oben weisende Unterseite des Trägermaterials aufgebracht, das anschließend vorteilhafterweise zur zweiten Trocknung durch den gleichen Trockenkanal gegenläufig hindurchgeleitet wird, um anschließend auf eine Vorratsrolle als fertiges Produkt aufgewickelt zu werden.

Das Trägermaterial wird daher innerhalb kurzer Zeitabstände zweimal durch den gleichen Trockenkanal hindurchgeführt, ehe es als fertiges Produkt auf eine Vorratsrolle aufgewickelt wird. Die Vorratsrolle, auf die das fertige Produkt aufgewickelt wird und die weitere Vorratsrolle, von der das zu behandelnde Trägermaterial abgezogen wird, befinden sich beide gegenüber dem einen Ende des Trockenkanals.

Die Erfindung betrifft auch ein Wasserglas oder dergleiche lösliches Silikat mit einer gewählten Viskosität zum Ausfüllen von Hohlräumen und zum Formen von nicht brennbaren Gegenständen, in dem dem Silikat ein anorganischer feinkörniger und/oder vernetzbarer fasriger Stoff als Füllstoff zugemischt ist. Beispielsweise handelt es sich um Kaolin oder Quarzmehl . Es kann aber auch besonders vorteilhaft sein, zusätzlich oder allein eine keramische Faser, z.B. Inorphil, zuzumischen. Das Gemisch kann pastenförmig sein, um z.B. Hohlräume beliebiger Art ausfüllen zu können. Es kann aber auch eine Konsistenz aufweisen, die zum Formen von Gegenständen beliebiger Gestalt geeignet ist. Bei den Hohlräumen kann es sich z.B. um Wanddurchbrüche oder Wandausnehmungen z.B. für Kabel handeln. Beispielsweise lassen sich mit Vorteil Kabelkanäle brandsicher abdichten.

## Ansprüche

1. Verwendung von Wasserglas oder dergleichen lösliches Silikat mit einer gewählten Viskosität zum Aufbringen auf Trägermaterialien zwecks Verbesserung ihrer mechanischen Eigenschaften (Festigkeit, Biegefähigkeit) und/oder ihrer Schwerentflammbarkeitseigenschaften in Richtung Nichtbrennbarkeit.

2. Verwendung nach Anspruch 1, dadurch gekennzeichnet, daß dem Silikat ein feinkörniger und/oder fasriger, vernetzbarer anorganischer Stoff als Füllstoff zugemischt ist.

3. Verwendung nach Anspruch 2, dadurch gekennzeichnet, daß der Füllstoff ein mineralischer Stoff ist.

4. Verwendung nach Anspruch 3, dadurch gekennzeichnet, daß der Füllstoff Kaolin und/oder Quarzmehl und/oder eine keramische Faser ist.

5. Verwendung nach einem der vorstehenden Ansprüche, dadurch gekennzeichnet, daß der wasserglasartige Stoff aus einem Gemisch verschiedener löslicher Silikate besteht.

6. Verwendung nach einem der vorstehenden Ansprüche, dadurch gekennzeichnet, daß die Viskosität auf einen Wert eingestellt ist, die ein Aufsprühen, Aufstreichen, Aufspachteln oder Aufbringen des Wasserglases oder Wasserglas/Füllstoffgemisches auf das Trägermaterial in einer Art und Weise erlaubt, daß das Trägermaterial von dem Wasserglas oder dergleichen Stoff oder Stoffgemisch weitgehend durchdrungen und die Trägermaterialteilchen im wesentlichen von dem Silikat ummantelt sind.

7. Verwendung nach einem der vorstehenden Ansprüche 1 bis 5, dadurch gekennzeichnet, daß die Viskosität auf einen Wert eingestellt ist, die ein Tränken des Trägermaterials mit Wasserglas oder dem Wasserglas/Füllstoffgemisch in einer Art und Weise erlaubt, daß das Trägermaterial von dem Wasserglas oder dergleichen Stoff oder Stoffgemisch weitgehend durchdrungen und die Trägermaterialteilchen im wesentlichen von dem Silikat ummantelt sind.

8. Verwendung nach Anspruch 6 oder 7, dadurch gekennzeichnet, daß die Viskosität niedriger als 70 Pa.s. ist, beispielsweise zwischen 30 bis 50 Pa.s., vorzugsweise bei 45 Pa.s. liegt.

9. Verwendung nach Anspruch 5, 6 oder 7, dadurch gekennzeichnet, daß die Viskosität durch die Auswahl eines oder mehrerer Wassergläser und/oder durch die Zugabemenge eines Füllstoffes eingestellt ist.

10. Verwendung nach Anspruch 6, 7 oder 8, dadurch gekennzeichnet, daß die Viskosität durch Zugabe von Wasser eingestellt ist.

11. Verwendung nach einem der vorstehenden Ansprüche, dadurch gekennzeichnet, daß der Feststoffgehalt des Wasserglases bzw. Wasserglasgemisches bzw. Wasserglas/Füllstoffgemisches zwischen 30 bis 70 % vorzugsweise um 50 % liegt.

12. Verwendung nach einem der vorstehenden Ansprüche, dadurch gekennzeichnet, daß das Wasserglas oder Wasserglasgemisch derart ausgewählt ist, daß es nach dem Aufbringen auf das Trägermaterial und bei ·Einwirkungen von extrem überhöhten Temperaturen ausblüht.

13. Verfahren zur Herstellung eines schwer entflammbaren Trägermaterials, dadurch gekennzeichnet, daß nach einem ersten Verfahren Trägermaterial auf an sich bekannte Weise hergestellt wird und daß nach einem anschließenden zweiten Verfahren das Trägermaterial zur Verbesserung seiner mechanischen Eigenschaften (Festigkeit, Biegbarkeit) und/oder seiner Schwerentflammbarkeit mit Wasserglas oder einem Wasserglasgemisch nach einem oder mehreren der vorstehenden Ansprüche 1 bis 12 in Kontakt gebracht wird.

14. Verfahren nach Anspruch 13, dadurch gekennzeichnet, daß das endlose Trägermaterial von einer Vorratsrolle abgezogen und über Rollen laufend auf seiner Oberseite mit Wasserglas oder Wasserglas/Füllstoffgemisch in Kontakt gebracht und anschließend durch einen Trockenkanal hindurchbewegt wird, daß das so ·behandelte Trägermaterial über weitere Rollen laufend derart umgelenkt wird, daß seine Unterseite zu oberst gedreht ist, um diese mit Wasserglas oder Wasserglas/Füllstoffgemisch in Kontakt zu bringen und daß das Trägermaterial anschließend gegenläufig zur ersten Trocknungsbewegung erneut durch den gleichen Trockenkanal hindurchbewegt wird, um anschließend als Fertigprodukt auf eine Rolle aufgewickelt zu werden.

15. Verfahren nach Anspruch 13 oder 14, dadurch gekennzeichnet, daß als Trägermaterial ein papier-oder pappenartiges Material verwendet wird.

16. Verfahren nach Anspruch 13 oder 14, dadurch gekennzeichnet, daß als Trägermaterial ein vliesartiges Material verwendet wird, wobei ein solches Material und/oder Struktur bevorzugt ist, daß es von dem Wasserglas oder dergleichen Stoff oder Stoffgemisch weitgehend ummantelt wird.

17. Verfahren nach Anspruch 13 oder 14, dadurch gekennzeichnet, daß als Trägermaterial ein vliesartiges Material verwendet wird.

18. Verfahren nach Anspruch 16, dadurch gekennzeichnet, daß als Trägermaterial ein Glasfaserservlies verwendet wird.

19. Verfahren nach einem oder mehreren der vorstehenden Ansprüche 13 - 14, dadurch gekennzeichnet, daß das Wasserglas oder dergleichen Stoff bzw. Stoffgemisch in einer oder mehreren Schichten auf das Trägermaterial aufgetragen wird.

20. Verfahren nach einem oder mehreren der vorstehenden Ansprüche 13 - 14, dadurch gekennzeichnet, daß das Wasserglas oder dergleichen Stoffgemisch wenigstens in Kontakt mit der einen Seite eines papier-pappen-oder vliesartigen Trägermaterials gebracht wird.

21. Verfahren zur Herstellung eines mehrschichtigen nicht brennbaren oder schwer entflammbaren Trägermaterials aus papier-pappen - oder vliesartigen Material nach einem oder mehreren der vorstehenden Ansprüche 13 bis 19, dadurch gekennzeichnet, daß das Trägermaterial aus mehreren Schichten oder Lagen besteht und daß zwischen zwei Schichten bzw. Lagen wenigstens eine Schicht aus Wasserglas oder dergleichen Stoff vorhanden ist, der zusätzlich die beiden Schichten miteinander verklebt.

22. Wasserglas oder dergleichen lösliches Silikat mit einer gewählten Viskosität zum Ausfällen von Hohlräumen und zum Formen von nicht brennbaren Gegenständen, dadurch gekennzeichnet, daß dem Silikat ein anorgnaischer feinkörniger und/oder vernetzbarer fasriger Stoff als Füllstoff, beispielsweise eine Keramikfaser, zugemischt ist.